# EUROPEAN PATENT APPLICATION

(11) **EP 1 201 135 A1**
(43) Date of publication of application: **02.05.2002**
(21) Application number: 00123715.5
(22) Date of filing: 31.10.2000
(51) Int. Cl.: A23F 5/46, A23F 5/40

(54) **Soluble black coffee**

(71) Applicant: SOCIETE DES PRODUITS NESTLE S.A., 1800 Vevey (CH)
(72) Inventor: Fairhurst, Peter, 1004 Lausanne (CH); Labbe, David, 1004 Lausanne (CH); Ortega, Geraldine, 1373 Chavornay (CH)

(57) **Abstract**

The invention relates to a method of improving acceptability of black coffee with young people. The method comprises incorporating a plant flavour which is complementary to the coffee taste in an un-whitened soluble coffee powder. The invention also relates to a soluble coffee powder incorporating a plant flavour , which is complementary to the coffee taste in an un-whitened soluble coffee powder. For example, the invention relates to a soluble coffee beverage wherein the plant flavour provides a tea taste, which subsequently gives away to a coffee taste in the mouth during consumption.

## Description

### Field of the Invention

This invention relates to a method of improving acceptability of black coffee with young people. The invention also relates to a soluble black coffee powder with improved acceptability to young people.

### Background to the Invention

Coffee beverage products of the instant type are well known. The classical type of instant coffee beverage is black soluble coffee. Usually, such products are soluble powders made from a spray or freeze-dried coffee extract. The black coffee beverage is prepared by mixing the soluble coffee powder with hot water. The black soluble beverage powder may be consumed with or without a sweetener.
Consumer research has shown that black coffee has a strong and positive image among the 16-24 age group. In particular black coffee and strong coffee were found to be positive attributes of coffee in general for this age group. However, at the same time it was found that the 16-24 year old age group do not particularly like the taste of black coffee. When this age group was asked what coffee beverages they wanted or liked to drink, beverages such as flavoured cappuccino or unctuous drinks were found to be popular and not black coffee with or without sweetener.
At the same time 16-24 year age group has been found to be well aware of the beneficial affects of caffeine in coffee and are often keen to make use of the caffeine alertness benefit. There is therefore a need for a black coffee beverage, which is acceptable in taste to the consumer, with a black coffee image of a recognisable coffee flavour, and which will allow the consumer to take advantage of the caffeine in coffee. A further need is to provide a black coffee beverage, which provides the convenience of soluble coffee.

An aim of the present invention is to increase consumer acceptability of black coffee by young people.
Another aim of the invention is to provide a black coffee which has increased consumer acceptability which at the same time provides the well know alertness benefit of caffeine.

Another aim of the invention is to provide a soluble black coffee with the above-discussed characteristics, which has a desirable taste.
A further aim is to provide a new soluble black coffee beverage.

### Summary of the Invention

Accordingly, in one aspect, the invention provides a method of improving acceptability of black coffee with young people, the method comprising incorporating a plant flavour which is complementary to the coffee taste in an un-whitened soluble coffee powder.

It is surprisingly found that the incorporation of a plant flavour which is complementary to the coffee taste in an un-whitened soluble coffee powder may modify the taste and that young people particularly like this taste.
In the present context plant flavour means plant extracts or plant aroma natural or natural identical. Further, in the present context an un-whitened soluble coffee powder or soluble black coffee means a soluble coffee powder which does not comprise any milk or milk based ingredients in an amount capable of significantly whitening the coffee.
It is preferred that the soluble coffee powder comprises from about 10% to about 50% of coffee solids by weight of the total solid content of the powder, more preferably from about 15% to about 35% wt. This gives a clearly recognisable coffee flavour to the product. It is further preferred that the soluble coffee powder comprises from about 50% to about 90 % of soluble sweetener by weight of the total solid content of the powder. This provides an appropriate level of sweetness to the product counteracting the inherent bitterness of coffee.
For certain plant flavours it is desirable to incorporate a texturant in the soluble powder. Preferably from about 2% to about 20% of texturant by weight of the total solid content of the powder, more preferably from about 3% to about 10% wt. The texturant aids the aroma equilibrium as perceived sensorially. If no or too little texturant is added the product becomes too thin and loses body in the mouth. On the other hand if too much texturant is added, the product become too viscous and soup like.
One embodiment of the invention which has been found to have a particular acceptability among young people is a soluble coffee beverage powder which provides a coffee beverage with a tea taste that subsequently gives away to a coffee taste in the mouth during consumption.
Another variety of the product which has been found to be preferred among young people is a soluble coffee beverage powder which provides a coffee beverage with a fresh taste and leaves a minty taste in the mouth at the end of consumption.
Other preferred embodiments of the invention will be discussed in the following.

In another aspect, this invention provides a black soluble coffee powder with improved acceptability to young people comprising, the soluble coffee powder incorporating a plant flavour, which is complementary to the coffee taste in an un-whitened soluble coffee powder. The considerations as to preferred embodiment of the method of the invention also apply to the black soluble coffee powder. Further details of the black soluble coffee powder are given below.

### Detailed Description of Preferred Embodiments of the Invention

Embodiments of the invention are now described, by way of example only. The invention provides a method of increasing the acceptability among young people with black coffee.

One method of the invention which has been found to make black coffee particular acceptability among young people is by providing a soluble coffee beverage powder which provides the coffee beverage with a tea taste that subsequently gives away to a coffee taste in the mouth during consumption. A black soluble coffee powder for this purpose preferably comprises from about 10% to about 50% of coffee solids by weight of the total solid content of the powder, from about 50% to about 90 % wt of soluble sweetener, from about 2% to about 20% wt of texturant, and black tea solids. The amount of black tea solids is advantageously from about 1 to about 5% wt of black tea soluble solids. The tea flavour of the soluble coffee powder may be further enhanced by addition of essence or tea aroma. The black soluble coffee powder may incorporate further biscuit or cake flavours for an additional taste experience. The biscuit or cake flavour is preferably provided in the form of biscuit or cake aroma. In addition the black soluble coffee powder may incorporate bergamot flavour. The bergamot flavour is preferably provided in the form of bergamot aroma.

Another variety of the product which has been found to be preferred among young people is a soluble coffee beverage powder which provides a coffee beverage with a warm soft taste, which complements the coffee taste. A black soluble coffee powder for this purpose preferably comprises from about 10% to about 50% of coffee solids by weight of the total solid content of the powder, from about 50% to about 90 % wt of soluble sweetener, from about 2% to about 20% wt of texturant, and maple syrup flavour. Preferably, the maple syrup flavour should not be more than 5% maple syrup aroma, for the coffee and maple syrup flavour to be balanced. More preferably the soluble coffee powder comprises from about 0.03 to about 5% wt of maple syrup aroma. The maple syrup aroma may be provided in maple syrup, or may be in the form of a separate aroma.

Another variety of the product which has been found to be preferred among young people is a soluble coffee beverage powder which provides a coffee beverage with a warm soft taste which complements the coffee taste and has an addition spicy note as the end taste. A black soluble coffee powder for this purpose preferably comprises from about 10% to about 50% of coffee solids by weight of the total solid content of the powder, from about 50% to about 90 % wt of soluble sweetener, from about 2% to about 20% wt of texturant, and spices together with a warm flavour component. Preferably, the soluble coffee powder comprises less than about 0.5% wt of spices. Advantageously, the spices are ethnic spices, preferably of Indian origin. The warm flavour components are preferably vanilla and/or honey aroma. A desirable taste balance is obtained when the soluble beverage powder comprises between about 0.5 % and about 4% wt of vanilla or honey aroma.

Another method of the invention which has been found to make black coffee particularly acceptable among young people is by providing a soluble coffee beverage powder which provides the coffee beverage with a fresh taste and leaves a minty taste in the mouth at the end of consumption. A black soluble coffee powder for this purpose preferably comprises from about 10% to about 50% of coffee solids by weight of the total solid content of the powder, from about 50% to about 90 % wt of soluble sweetener, and liquorice, mint and fennel flavours. Preferably, the soluble coffee powder comprises of liquorice flavour in the form of liquorice aroma. A preferred amount of liquorice aroma is less than about 1% wt of liquorice aroma. It is preferred that the mint and fennel flavours are provided in the form extracts. Preferably less than 1% wt of mint extract and 1% of fennel extract is incorporated into the soluble coffee powder.

Another variety of the product which has been found to be well accepted among young people is a soluble coffee beverage powder which provides a coffee beverage with a fruit taste which subsequently gives away to a coffee taste in the mouth during consumption. A black soluble coffee powder for this purpose preferably comprises from about 10% to about 50% of coffee solids by weight of the total solid content of the powder, from about 50% to about 90 % wt of soluble sweetener, fruit flavour and citric acid. Preferably, the fruit flavour is provided in the form of fruit powder, for example from about 2% to about 10% wt of fruit powder. A preferred amount of citric acid is less than about 1% wt, more preferably from about 0.02 to 0.5% wt of citric acid. The citric acid improves the harmony of the fruit and coffee flavours hence improving the equilibrium of the drink. Too much citric acid leads to a drink that is too acid and no longer balanced.

For the preparation of the beverage, conveniently powdered coffee solids are used originating from coffee liquor. The coffee liquor may be obtained using any suitable procedure. Usually, the coffee liquor is prepared by concentrating a coffee extract obtained from a coffee extraction process to the desired coffee concentration. The coffee extract may be produced in the usual manner by subjecting roasted coffee beans to extraction. Any suitable extraction procedure may be used because the choice and design of the extraction procedure is a matter of preference and has no critical impact on the invention. Suitable extraction procedures are described in European patent applications 0826308 and 0916267; the disclosures of which are incorporated by reference. Similarly, any suitable concentration procedure may be used because the choice and design of the concentration procedure is a matter of preference and has no critical impact on the invention. Of course, the coffee liquor may also be prepared by dissolving soluble coffee powder in water to the desired concentration.

Coffee replacers or surrogates may also be used such as chicory. This will however provide a cup profile, which is less aromatic and has no coffee aroma at all.

For the production of soluble coffee, merely processing the roasted coffee beans to a coffee base concentrate as described above will result in the loss of substantially all coffee aroma. Therefore, it is preferred to specifically strip off and then collect the coffee aroma during processing. In this way, the coffee aroma is not lost. Processes for stripping off and collecting the coffee aroma are well known. Usually coffee aroma is stripped off at one or more stages; for example:-
- using an inert gas or steam during, or immediately after, grinding of the coffee beans, and
- using steam to strip coffee aroma from the coffee extract during extraction.
   Alternatively, the fresh coffee grounds may be slurried in water or coffee extract and the coffee aroma stripped from the slurry. A suitable procedure is described in International patent application PCT/EP99/00747; the disclosure of which is incorporated by reference.
   The coffee aroma may be captured using any suitable procedure. Ordinarily, the coffee aroma is captured by condensing from the carrier gas in one or more condensers. Preferably more than one condenser is used; each succeeding condenser being operated at a lower temperature than the previous condenser. If necessary or desired, one of the condensers may be a cryogenic aroma condenser. A suitable cryogenic aroma condenser is described in US patent 5,182,926; the disclosure of which is incorporated by reference. The captured coffee aroma may, if desired, be concentrated using a suitable technique such as partial condensation or rectification. The captured coffee aroma may be combined with a suitable carrier substrate such as coffee oil or emulsion containing coffee oil or other fats . Aqueous coffee aroma components and organic coffee aroma components are then separated. A suitable method for separating aqueous coffee aroma components from organic coffee aroma components are described in co-pending European patent application 99200241.0; the disclosure of which is incorporated by reference.
   The processes for the production of the coffee extract and capture of the coffee aroma may be carried out under oxygen reduced or oxygen free conditions if desired. This may be accomplished as is known in the art; for example by carrying out the processes under a blanket of inert gas. Further, deoxygenated water may be used whenever water is necessary in the process.
   The coffee aroma is preferably stored under oxygen reduced or oxygen free conditions and frozen. Similarly, the coffee base concentrate may be stored under oxygen reduced or oxygen free conditions. Further, if desired, oxygen scavengers may be added to the coffee aroma and/or coffee base concentrate. Suitable oxygen scavengers are described in European patent application 99200185.9; the disclosure of which is incorporated by reference.

The soluble beverage powder preferably contains about 0.05% to about 0.2% by weight of coffee aroma components.

The soluble coffee beverage powder may also include a soluble sweetener; natural or artificial. Suitable examples include sucrose, fructose, lactose, maltose, saccharin, cyclamates, acetosulfame, L-aspartyl based sweeteners such as aspartame, and the like, and mixtures of these. The amount of the sweetener used will vary depending upon the desired level of sweetness and the strength of the sweetener. However for sugar based sweeteners, the total amount of sweeteners is usually in the range of about 10% to about 25% by weight. The soluble sweetener may also be combined with bulking agents such as maltodextrins and polydextrose; particularly if an artificial sweetener is used. In this case, the total amount of sweetener and bulking agent is usually in the range of about 10% to about 25% by weight; artificial sweetener itself usually comprising less than 1% by weight.

In some embodiment of the soluble beverage according to the invention, the beverage powder also preferably comprises a texturant to a) give the beverage more body and b) to round and smooth the sensory perception of certain added aromas. The texturants have been found to be particularly suitable when used in combination with warm flavours such as maple, honey, vanilla and biscuit. Suitable texturants are Carboxymethlcellulose (CMC) or pectins. It has been found that the amount of texturants will depend on the aromas added and the amount of body desired for the product. If too little texturant is added the product becomes too thin and loses body in the mouth, the aroma equilibrium as perceived sensorially also becomes less balanced. If too much texturant is added the product becomes soup like and too viscous.
Advantageously, the soluble coffee powder comprises from about 2% to about 20% of texturant by weight of the total solid content of the powder, preferably from about 5% to about 7% wt. of texturant. The appropriate amount of texturant will depend upon the different dosage for the different beverages. For example, a preferred amount of texturant is from 100 to 400 mg for a 100 ml serving.

The plant flavour may be a plant extract or plant aroma natural and/or natural identical. The plant extracts and/or aromas may be added to the coffee at the same time as the sugar. The product may then be dry mixed to produce a substantially homogeneous product. The mixture then undergoes a texturisation process (agglomeration, freeze-drying or other). An alternative method that may be used involves performing a texturisation on the sugar and coffee mix, and then spraying the aromas onto the resulting texture.

The ingredients of the beverage powder may be dry mixed. If a freeze drying texturisation operation is used, a wet mix is used. The liquid used for wet mixing may conveniently be coffee liquor.
Subsequently, the wet mix may be gassed by injecting of a gas such as nitrogen or carbon dioxide into it. The gas is then dispersed within the mixture by means of a dispersing machine and the gassed mixture is then passed onto a homogeniser. The gassing may be used to control the eventual density of the powder and to improve the solubility of the product.

The wet mix may be dried by means of any conventional drying techniques such a freeze-drying or spray drying.
For freeze drying the coffee/soluble sweetener/plant extract and/or aroma wet mix is frozen on a band at temperatures between -30 and -50 °C. The product is then dried under a vacuum where the water is removed by sublimation.
For spray-drying the product is atomised into small droplets and the water in the product is removed by the hot air in a drying tower.
Subsequent to the drying, the powder may be cooled in a fluidized bed cooler.

It is preferred that the tapped specific gravity of the powder is in the range from about 200 to about 400g/l, more preferred is a tapped specific gravity between about 250 and about 300g/l. Tapped specific gravity is referring to the gravity of the powder when compressed by vibrating the powder with 100 pushes of 10mm.
As mentioned above, the soluble coffee powder may be agglomerated to give a texture to the powder a better wettability or to obtain a more desirable appearance of the powder.
Specific examples are now described to further illustrate the invention.

### Example 1 - Preparation of the of Coffee Beverage Powder

Samples of coffee beverage powder according to the invention are prepared with the following ingredients that are dry mixed for the purpose of the examples. The soluble black coffee used is Nescafé™ commercially available from Nestlé S.A. in France and Switzerland.

### Samples 1a

Conventional coffee powder at a percentage of 10-30% wt is dry mixed with a soluble sweetener 60-70 %wt. When a homogeneous mix is obtained 0.5 - 5%wt black tea extract and 2-10 %wt texturant are added. The coffee beverage powder is then dry mixed until a homogeneous.

### Samples 1b

Conventional coffee powder at a percentage of 10-30% wt is dry mixed with a soluble sweetener 60-80 %wt. When a homogeneous mix is obtained 0.5 - 5%wt black tea extract and 2-10 %wt texturant are added and mixed. Then 0.1 - 1% of a biscuit aroma is added. The coffee beverage powder is then dry mixed until a homogeneous.

### Samples 1c

Conventional coffee powder at a percentage of 10-30% wt is dry mixed with a soluble sweetener 60-80 %wt. When a homogeneous mix is obtained 3-10 % wt texturant and 0.4- 2 % maple syrup aroma are added. The coffee beverage powder is then dry mixed until a homogeneous.

### Samples 1d

Conventional coffee powder at a percentage of 10-30% wt is dry mixed with a soluble sweetener 60-80 %wt. Then 3-8% wt texturant, 0.1 - 3 % wt Indian spices, and 0.1 to 2% wt of vanilla aroma are added. The coffee beverage powder is then dry mixed until a homogeneous.

### Samples 1e

Conventional coffee powder at a percentage of 10-30% wt is dry mixed with a soluble sweetener 60-90 %wt. Then 0.05 - 2.0 % wt liquorice, fennel and mint plant extracts and aromas are added. The coffee beverage powder is then dry mixed until a homogeneous.

### Samples 1f

Conventional coffee powder at a percentage of 10-30% wt is dry mixed with a soluble sweetener 60-90 %wt. Then 1-10 % wt fruit powder and 0.01-0.5 % wt are added to the coffee powder - sugar mix. The coffee beverage powder is then dry mixed until a homogeneous.

### Example 2 - Preparation of the of Coffee Beverage

To prepare the beverage about 8 g of powder are spooned into a mug. About 200 ml of hot water 70- 80 ° C are then added to the cup and the solution is then stirred by a spoon to ensure that all the powder has dissolved. The beverage is then ready to be consumed.

A trained panel tasted the samples of 1a-f panellist found that:
Samples 1a have a tea tastes which subsequently gives away to a coffee taste in the mouth.
Samples 1b have a tea tastes which subsequently gives away to a coffee taste in the mouth. In addition samples 1b have a warm flavour of biscuit.
Samples 1c have a warm soft taste, which complement the coffee taste.
Samples 1d have a warm soft taste, which complement the coffee taste and additionally a spicy flavour as end taste.
Samples 1e have a fresh taste and leaves a minty taste in the mouth at the end of consumption.
Samples 1f have a fruit tastes, which subsequently gives away to a coffee taste in the mouth.

### Example 3 - Consumer Acceptance Test

A comparative confidential test is conducted with a panel of 30 untrained 18-26 years old consumers. The consumers are asked to compare the samples prepared according to samples 1a-f and then by the method outlined in example 2 with beverages prepared from the classical commercially available black soluble coffee used in the formulations described in examples 1a-1f including the same amount of sugar, and comparable dosing.

In all cases examples 1a - 1f the majority of the panellists find that the samples 1a -1f are more acceptable and pleasant compared to classic soluble coffee beverage with the same amount of sugar. Further to this point it would appear that certain of these beverages which have a coffee character are equally acceptable to non-coffee and coffee drinkers is the 18-26 year old age group.

## Claims

1. A method of improving acceptability of black coffee with young people, the method comprising incorporating a plant flavour which is complementary to the coffee taste in an un-whitened soluble coffee powder.

2. A method according to claim 1, wherein the plant flavour provides a tea tastes which subsequently gives away to a coffee taste in the mouth.

3. A method according to claim 1, wherein the plant flavour provides a fresh taste and leaves a minty taste in the mouth at the end of consumption.

4. A method according to claim 1, wherein the plant flavour provides a fruit tastes which subsequently gives away to a coffee taste in the mouth.

5. A method according to claim 1, wherein the plant flavour provides warm soft taste which complement the coffee taste.

6. A method according to any of claim 1 and 5, wherein the plant flavour provides a spicy flavour as end taste.

7. A method according to claim 1, wherein the soluble coffee powder comprises from about 10% to about 50% of coffee solids by weight of the total solid content of the powder.

8. A method according to any of claim 1 to 7, wherein the soluble coffee powder comprises from about 50% to about 90 % of soluble sweetener by weight of the total solid content of the powder.

9. A method according to any of claim 1 to 8, wherein the soluble coffee powder comprises from about 2% to about 20% of texturant the total solid content of the powder.

10. A method according to any of claim 1, 2, and 7 to 9, wherein the soluble coffee powder comprises black tea solids.

11. A method according to any of claim 1, 5, and 7 to 9, wherein the soluble coffee powder comprises maple syrup flavour.

12. A method according to any of claim 1, and 5 to 9, wherein the soluble coffee powder comprises spices together with a warm flavour component.

13. A method according to any of claim 1, 3, and 7 to 8, wherein the soluble coffee powder comprises from liquorice, mint and fennel flavour.

14. A method according to any of claim 1,4, and 7 to 8, wherein the soluble coffee powder comprises fruit flavour and citric acid.

15. A black soluble coffee powder with improved acceptability to young people comprising, the soluble coffee powder incorporating a plant flavour, which is complementary to the coffee taste in an un-whitened soluble coffee powder.

16. A black soluble coffee powder according to claim 15, comprising
from about 10% to about 50% of coffee solids by weight of the total solid content of the powder,
from about 50% to about 90 % wt of soluble sweetener,
from about 2% to about 20% wt of texturant, and black tea solids.

17. A black soluble coffee powder according to claim 16, wherein the black soluble coffee powder incorporates biscuit or cake flavour.

18. A black soluble coffee powder according to any of claims 16 and 17, wherein the black soluble coffee powder incorporates a bergamot flavour.

19. A black soluble coffee powder according to claim 15, comprising
from about 10% to about 50% of coffee solids by weight of the total solid content of the powder,
from about 50% to about 90 % wt of soluble sweetener,
from about 2% to about 20% wt of texturant, and
maple syrup flavour.

20. A black soluble coffee powder according to claim 15, comprising
from about 10% to about 50% of coffee solids by weight of the total solid content of the powder,
from about 50% to about 90 % wt of soluble sweetener,
from about 2% to about 20% wt of texturant, and spices together with a warm flavour component.

21. A black soluble coffee powder according to claim 15, comprising
from about 10% to about 50% of coffee solids by weight of the total solid content of the powder,
from about 50% to about 90 % wt of soluble sweetener, and liquorice, mint and fennel flavour.

22. A black soluble coffee powder according to claim 15, comprising
from about 10% to about 50% of coffee solids by weight of the total solid content of the powder,
from about 50% to about 90 % wt of soluble sweetener, fruit flavour and citric acid.
